# NEUE EUROPÄISCHE PATENTSCHRIFT

(11) **EP 0 556 194 B2**
(45) Veröffentlichungstag und Bekanntmachung des Hinweises auf die Entscheidung über den Einspruch: **28.01.1998**
(45) Hinweis auf die Patenterteilung: 12.04.1995
(21) Anmeldenummer: 91917000.1
(22) Anmeldetag: 27.09.1991
(51) Int. Cl.: C04B 26/04, C04B 41/46, C09D 109/00, E04F 15/12, E01C 13/00

(54) **LUFTTROCKNENDE BINDEMITTEL**
AIR-DRYING BINDERS
LIANTS SECHANT A L'AIR

(30) Priorität: 07.11.1990 DE 4035359
(43) Veröffentlichungstag der Anmeldung: 25.08.1993
(73) Patentinhaber: GÜLS, Volker, D-51145 Köln (DE)
(72) Erfinder: GÜLS, Volker, D-51145 Köln (DE)
(74) Vertreter: Jönsson, Hans-Peter, Dr.Dipl.-Chem.
(86) Internationale Anmeldenummer: EP9101851
(87) Internationale Veröffentlichungsnummer: WO9208679

(56) Entgegenhaltungen:
- EP-A- 0 146 098
- EP-A- 0 211 712
- EP-A- 0 276 657
- EP-A- 0 294 501
- EP-A- 0 304 767
- JP-A-61 258 743
- World Patent Index Latest, Derwent Publications Ltd, (London, GB) & JP,A, 61258743
- Chemical Abstracts, volume 101, No.42, 1984 (Columbus, Ohio, US) see page 95, abstract 74471e, & JP;A,5964138
- Chemical Abstrats, volume 17, No.42, 1987 (Columbus, Ohio, US) see abstract 218228s, & RO,A,91529
- Derwent Abstract Nr OD/86/343 827
- Merkblatt Polyöl 110 Hüls v. April 1975
- Produktinformation POLYVEST OC 4000 (Jan. 1989)
- Die Baustofflösung, Hüls, 7.4. Syntheseöl BF (1974) nebst Anlagen A1-A3
- Broschüre UNIVEST; Fa. Hüls, Nr 1119 (Sept 1985)

## Beschreibung

Die Erfindung betrifft lufttrocknende Bindemittel auf der Basis von bei Raumtemperatur flüssigen Polybutadienölen und speziellen Kohlenwasserstoffen und Terpentinöl sowie deren Verwendung zur Verfestigung, Verklebung, Beschichtung oder Imprägnierung von Baustoffen, Reststoffen, Abfallstoffen und sonstigen Materialien aller Art.

Die Verwendung von bei Raumtemperatur flüssigen Butadienölen zur Herstellung von lufttrocknenden Harzen ist seit langem im Stand der Technik beispielsweise aus Römpps Chemielexikon, 9. Auflage, Seite 3280 (Heidel und Dittmann, Chimia, 22, (1968, S. 213-218), bekannt. Auf dem Bausektor haben jedoch Butadienöle in der Vergangenheit aufgrund der schwierigen Verarbeitbarkeit wenig Anklang gefunden. Bekanntermaßen trocknen die flüssigen Polybutadienöle unter der Einwirkung von Luftsauerstoff relativ schnell aus, so daß eine Lagerung unter Schutzgas empfohlen wird. Auch die Verwendung von Lösungsmitteln wie Testbenzinen zur Einstellung der Viskosität der Polybutadienöle beinhaltet gewisse Schwierigkeiten, wenn das mit den Polybutadienölen zu verfestigende Produkt bei üblichen Umgebungstemperaturen wie beispielsweise Raumtemperatur an der Luft getrocknet werden soll. Darüber hinaus reagieren die im Handel erhältlichen Polybutadienöle außerordentlich leicht mit Wasser, so daß die zu verbindenden Baustoffe bisher in besonders trockener, praktisch wasserfreier Form eingesetzt werden mußten.

EP 0 211 712 A1 beschreibt ein organisches Bindemittel zur Behandlung von porösen Baustoffen mittels einer Lösung von bei Raumtemperatur flüssigen Polybutadienölen in aromatischen oder aliphatischen Kohlenwasserstoffen, insbesondere Xylol, Toluol, Benzin F und Testbenzin.

Es ist daher eine Aufgabe der vorliegenden Erfindung, lufttrocknende Bindemittel auf der Basis von bei Raumtemperatur flüssigen Polybutadienölen bereitzustellen, die einfach und ohne Schutzgasatmosphäre handhabbar sind und den zu verfestigenden Materialien eine hohe Druckfestigkeit verleihen. Bei der Verklebung, Beschichtung oder Imprägnierung von Materialien besteht die vornehmliche Aufgabe darin, diesen einen festen inneren Verbund zu verleihen und/oder die Oberfläche vor Umwelteinflüssen zu schützen, sowie eine möglichst optimale Verklebung der Materialien oder Grundierung für weitere Oberflächenbehandlungen zur Verfügung zu stellen.

Weiterhin ist Aufgabe der vorliegenden Erfindung Reststoffe und Abfallstoffe wie beispielsweise Kunststoff oder Schaumstoffreste einer geeigneten Wiederverwendung zuzuführen.

Die vorstehend genannten Aufgaben wurden gelöst mit
einem lufttrocknenden Bindemittel auf der Basis von bei Raumtemperatur flüssigen Polybutadienölen und aliphatischen Kohlenwasserstoffen, dadurch gekennzeichnet, daß sie 35 bis 89,5 Gew.-% aromatenfreie aliphatische Kohlenwasserstoffe, die weniger als 100 ppm Aromaten enthalten mit einer Verdunstungszahl nach DIN 53170 im Bereich von mehr als 100 bis 1000 und 0,5 bis 30 Gew.-% Terpentinöl enthalten.

Überraschenderweise wurde nach langwierigen Testversuchen herausgefunden, daß die erfindungsgemäß einzusetzenden aromatenfreien Kohlenwasserstoffe und das, Terpentinöl in der Lage sind, handelsüblichen Polybutadienölen eine erniedrigte Viskosität zu verleihen, die erstmals eine außerordentlich einfache Handhabung erlauben. Das Merkmal der Aromatenfreiheit ist hier von besonderer Bedeutung, da übliche Aromatengehalte in handelsüblichen aliphatischen Kohlenwasserstoffen, beispielsweise Testbenzin, das Bindemittel unbrauchbar machen und aus Umweltschutzgründen nicht empfehlenswert sind.

Es wurde gefunden, daß mit Hilfe der vorliegenden Erfindung auch Materialien wie Sand, die mehr als 2 Gew.% Wasser enthalten, verbunden werden können, während bisher im Stand der Technik besondere Vorbereitungen getroffen werden mußten, beispielsweise das Ausglühen, um die Wassergehalte möglichst klein zu halten. So war es bisher erforderlich Sande mit einem SiO₂-Gehalt von mehr als 99,5% einzusetzen.

Darüber hinaus wurde gefunden, daß Polybutadienöle in Anwesenheit der aromatenfreien aliphatischen Kohlenwasserstoffe und dem Terpentinöl in handelsüblichen Behältern ohne Schutzgasatmosphäre praktisch unbegrenzt gelagert werden können, ohne die Eigenschaften zu verändern. Andererseits wird jedoch beim Vermischen, Streichen, nach Hochdruck- oder Niederdruckverfahren, Eintauchen, Besprühen oder sonstigen Verfahren mit Baustoffen, Reststoffen, Abfallstoffen und sonstigen Materialien aller Art eine Abbinde- oder Trockenzeit erreicht, die eine problemlose Anwendung der lufttrocknenden Bindemittel für eine Vielzahl von Produkten erlaubt.

Bei Raumtemperatur oder leicht erhöhter Temperatur bis etwa 50 oder 70 °C werden beispielsweise Topf Zeiten (Abbindezeiten) von wenigen Stunden bis einigen Tagen erreicht, die je nach Bedarf eingestellt werden können. Auch Verarbeitungstemperaturen unterhalb 0 °C, beispielsweise bis -50 °C, sind ohne weiteres möglich. Die Topfzeit ist selbstverständlich neben der Temperatur auch von den zu verfestigenden, zu verklebenden, zu beschichtenden oder zu imprägnierenden Materialien und der Menge des lufttrockenden Bindemittels, bezogen auf die jeweiligen Materialien, abhängig. Die Einstellung vorgewählter Topfzeiten ist durch einfache Versuche möglich, bei denen insbesondere die Temperatur und die Menge des Bindemittels, bezogen auf die jeweiligen Materialien, variiert wird. Darüber hinaus läßt sich selbstverständlich auch das Mengenverhältnis von Polybutadienölen zu aromatenfreien aliphatischen Kohlenwasserstoffen und/oder dem Terpentinöl in einem breiten Bereich variieren und somit neben der Topfzeit auch die verfestigende Wirkung des lufttrocknenden Bindemittels variieren. Hohe Polybutadienanteile führen hier in der Regel zu festen Verbunden. Durch Zugabe von Wasser, beispielsweise in einer Menge von bis zu 20%, bezogen auf das Bindemittel, läßt sich eine außerordentlich lange Abbindezeit einstellen. Die Verwendung von bis zu 99 % Wasser erlaubt die Herstellung von Flächenbegrünungen.

Wenn im Sinne der vorliegenden Erfindung die Rede von Polybutadienölen ist, so werden hierunter unsubstituierte und substituierte Polybutadiene verstanden, die in vielfältiger Form im Handel von verschiedensten Herstellern erhältlich sind.

Besonders bevorzugt im Sinne der vorliegenden Erfindung ist ein Polybutadienöl, das etwa 72 % 1,4-cis-Doppelbindungen, etwa 27 % 1,4-trans-Doppelbindungen und etwa 1 % 1,2-Vinyl-Doppelbindungen aufweist, das darüber hinaus eine Molmasse von etwa 1800, eine Dichte von etwa 0,91 g/cm³ und eine Viskosität von 770 mPas (Brookfield) besitzt. Bei dem unter der Bezeichnung Polyöl^{R} 110 im Handel erhältlichen Produkt variieren die Anteile der jeweiligen Doppelbindungen um die genannten Werte. Ebenso stellt die Angabe der Molmasse nicht auf das ausschließliche Vorhandensein von Polybutadien mit der genannten Molmasse ab, sondern hierunter ist ein mittleres Molekulargewicht zu verstehen, das bedingt durch unterschiedliche Chargen auch variiert. Aus der Angabe der Viskositätszahl bei 20 °C ergibt sich, daß es sich zwar um ein fließfähiges, jedoch relativ hochviskoses Polybutadienöl handelt. Die Polybutadienöle haben auch bei Temperaturen bis unter -50 °C eine noch ausreichende Viskosität.

Den Polybutadienölen können in einer weiteren Ausführungsform der vorliegenden Erfindung an sich aus dem Stand der Technik bekannte Zusatzstoffe, die auch Synthesekautschuk zugesetzt werden können, in gleicher Weise zugesetzt werden. Eine Übersicht über im Stand der Technik bekannte Kautschuk-Chemikalien und-Zuschlagsstoffe gibt Ullmanns Enzyklopädie der Technischen Chemie, 4. Auflage, Band 13, Seiten 637-671. Dementsprechend können in einer bevorzugten Ausführungsform der vorliegenden Erfindung die Polybutadienöle insbesondere Hydrophobierungs-, Alterungs- und Ermüdungsschutzmittel, Füllstoffe, Pigmente sowie sämtliche auf dem Bausektor bekannten Polymerharze auf der Basis von Polyurethanen, Silikonen, Epoxiden, Acrylaten, Polyestern, Polysulfiden auf der Basis anorganischer und organischer Lösungsmittel sowie auch auf Wasserbasis (Lösung oder Emulsion) enthalten. Geeignete Mengen dieser Mittel sind dem Fachmann einerseits aus der Synthesekautschukherstellung bekannt; andererseits sind diese Mengen auch durch einfache Versuche zu ermitteln. Voraussetzung für deren Einsatz ist jeweils die Verträglichkeit mit den Polybudtadienölen und den einzusetzenden Lösungsmitteln. So können dem erfindungsgemäßen Bindemittel beispielsweise im Stand der Technik bekannte anorganische und/oder organische Hydrophobierungsmittel wie Zinn-organische Verbindungen, Silikone, Alkylchlor- und Alkylalkoxysilane, Paraffine, Wachse, Metallseifen auch mit Zusätzen an Aluminium- oder Zirkonium-Salzen, quartäre organische Verbindungen, Harnstoff-Derivate oder Fettsäure-modifizierte Melaminharze zugesetzt werden. Die einzusetzenden Mengen richten sich dabei nach dem gewünschten Grad der Hydrophobierung und können bei Bedarf vom Fachmann mit einfachen Versuchen ermittelt werden.

Zur Beschleunigung der Trocknung ist der Einsatz von Übergangsmetallverbindungen, insbesondere organischen Metallsalzen von Übergangsmetallen auch aus der Synthesekautschukherstellung bekannt. Dementsprechend besteht eine bevorzugte Ausführungsform der vorliegenden Erfindung darin, Polybutadienöle mit Trockenstoffen vom Typ mehrwertiger organischer Metallsalze einzusetzen, die eine besonders gezielte Abbindungszeit ermöglichen.

In gleicher Weise kann es erforderlich sein, den Polybutadienölen Netzmittel zuzusetzen, um eine verbesserte Haftfestigkeit zwischen den getrockneten Polybutadienölen und dem zu verfestigenden, zu verklebenden, zu beschichtenden oder zu imprägnierenden Material zu erzielen. Aufgrund der ansich hydrophoben Natur der Polybutadienöle selbst haben sich nichtionoge Netzmittel als besonders vorteilhaft herausgestellt, wobei insbesondere Nonylphenolethoxylate bevorzugt verwendet werden. Als organische Metallsalze werden vorzugsweise Kobalt, Blei, Magnesium und/oder Mangan enthaltende Verbindungen eingesetzt, jeoch in derart geringen Anteilen, daß die Umweltverträglichkeit des Produkts nicht beeinträchtigt wird, insbesondere die Wassergefährdungsklasse nach den einschlägigen Bauverordnungen nicht verschlechtert wird.

Prinzipiell sind zwar alle bekannten Kohlenwasserstoffe geeignet, die Viskosität von Polybutadienölen zu reduzieren. Handelsübliche Kohlenwasserstoffe, die vielfach als Lösungsmittel eingesetzt werden, enthalten jedoch meist einen mehr oder weniger großen Anteil an Aromaten, insbesondere Benzol. Demgegenüber besteht die Erfindung darin, aromatenfreie aliphatische Kohlenwasserstoffe insbesondere mit Verdunstungszahlen nach DIN 53 170 (Verdunstungszahl von Diethylether = 1) im Bereich oberhalb von 50; vorzugsweise im Bereich von 100 bis 1000 einzusetzen. Hierbei wird erreicht, daß der aromatenfreie aliphatische Kohlenwasserstoff oder das aliphatische Kohlenwasserstoffgemisch bei der Anwendung der Bindemittel in vergleichbarer Zeit verdunstet, wie die Autoxidation der Polybutadienöle fortschreitet. Bevorzugt eingesetzt werden daher im Sinne der vorliegenden Erfindung Gemische von Isoparaffinen mit 8 bis 16 C-Atomen, insbesondere 11 bis 13 C-Atomen und Aromatengehalten von weniger als 100 ppm, insbesondere 50 ppm. Wenn im Zusammenhang mit der Erfindung also die Rede von aromatenfreien aliphatischen Kohlenwasserstoffen ist, so bedeutet dies, daß die einzusetzenden aliphatischen Kohlenwasserstoffe, die auch im Handel erhältlich sind, auch solche einschließen, die nur geringe Mengen an Benzol, beispielsweise 100 ppm oder weniger, enthalten.

Terpentinöl ist beispielsweise in Ullmanns Enzyklopädie der technischen Chemie, 4. Auflage, Band 22, Seite 553 bis 564 definiert und umfaßt im weitesten Sinne natürliche oder synthetische Gemische von mono- und bicyclischen Monoterpenen neben in der Regel kleinen Mengen an Terpen-Sauerstoff-Verbindungen (z.B. Terpenalkohole), Sesquiterpenen und andere Verbindungen. So wird weiterhin unterschieden in Balsamterpentinöl, Wurzelterpentinöl, Sulfatterpentinöl und Kienöl einschließlich Terpentinersatz, Pine Oil oder Orangenterpenen.

In einer bevorzugten Ausführungsform der vorliegenden Erfindung wird Pine Oil als Bestandteil der lufttrocknenden Bindemittel eingesetzt. Hierunter versteht man nach Ullmanns Enzyklopädie der Technischen Chemie, 4. Auflage, Band 22, Seite 561 und 562, brennbare, farblose bis gelbe, ölige angenehm riechende Flüssigkeiten, deren Hauptkomponenten aus Terpenalkoholen, hauptsächlich α-Terpineolen und Terpen-Kohlenwasserstoffen besteht. Synthetisches Pine Oil unterscheidet sich in der chemischen Zusammensetzung von natürlichem, insbesondere durch das Fehlen von Borneol, Campher, Ester, Anethol und Sesquiterpenen. Im Rahmen der vorliegenden Erfindung sind jedoch synthetische und natürliche Pine Oils gleichermaßen einsetzbar.

Erfindungsgemäß enthalten also die Bindemittel aromatenfreie aliphatische Kohlenwasserstoffe und Terpentinöl nebeneinander.

Das Mengenverhältnis dieser Bestandteile untereinander ist im Rahmen der vorliegenden Erfindung in der Regel nicht kritisch, da beide Bestandteile die gleiche Aufgabe, nämlich die Einstellung der Viskosität und der Trocknungszeit des Bindemittels lösen. Darüber hinaus bewirken diese Bestandteile eine gute Beständigkeit sogar feuchten Materialien gegenüber, die die erfindungsgemäßen Bindemittel einer sehr breiten Anwendung zugänglich machen.

Ebenso von gewisser Bedeutung ist die Gesamtmenge der einzusetzenden aromatenfreien aliphatischen Kohlenwasserstoffe und Terpentinöl bezogen auf die Polybutadienöle. Eine zu geringe Menge an aromatenfreien aliphatischen Kohlenwasserstoffen und Terpentinöl bedingt selbstverständlich eine hohe Viskosität des Bindemittels, das dieses für viele praktische Anwendungen wenig geeignet erscheinen läßt. Andererseits ist für bestimmte Anwendungen eine geringe Viskosität erwünscht, vornehmlich bei der Verklebung oder Imprägnierung von Materialien, bei denen ein möglichst tiefes Eindringen des Bindemittels in das Material erwünscht ist. Beim Beschichten von Oberflächen kann dagegen eine hohe Viskosität erwünscht sein, wenn eine sofortige Haftung auf der Oberfläche angestrebt wird. Gleiches gilt auch für bestimmte Anwendungen beim Verkleben oder Imprägnieren.

Eine zu starke Verdünnung der Polybutadienöle mit aromatenfreien aliphatischen Kohlenwasserstoffen und Terpentinöl andererseits bedingt eine geringe Verfestigungswirkung der Bindemittel, die allerdings durch ein angepaßtes Mengenverhältnis von zu verfestigendem Material und Bindemittel wieder ausgeglichen werden kann.

Aufgrund des Eigengeruchs des Terpentinöls werden die einzusetzenden Mengen hier üblicherweise geringer gehalten, so daß neben den Polybutadienölen Terpentinöl einer Menge von 0,5 bis 30, insbesondere 1 bis 20 Gew.%, in den erfindungsgemäßen Bindemitteln enthalten ist. Die genannten Mengenangaben für aromatenfreie aliphatische Kohlenwasserstoffe und Terpentinöl sind dabei für die Möglichkeiten ausgelegt, daß die aromatenfreien aliphatischen Kohlenwasserstoffe und Terpentinöl, insbesondere Pine Oil, jeweils alleinige Bestandteile der Bindemittel sind und darüber hinaus auch für den Fall, daß neben aromatenfreien aliphatischen Kohlenwasserstoffen auch Terpentinöl in den erfindungsgemäßen Bindemitteln enthalten ist. Hierbei gelten die genannten Obergrenzen für die Gemische aus Kohlenwasserstoffen und Terpentinöl, so daß wenigstens 2 Gew.-% Polybutadienöle enthalten sind.

Eine weiter bevorzugte Ausführungsform beinhaltet die Anwesenheit von 35 bis 89,5 Gew.%, insbesondere 35 bis 55 Gew.% aromatenfreie aliphatische Kohlenwasserstoffe neben 1 bis 15 Gew.%, insbesondere 5 bis 15 Gew.% Terpentinöl bezogen auf das Bindemittel. Auch hier gelten die oben genannten Obergrenzen.

Im Stand der Technik sind auch substituierte und modifizierte Polybutadienöle bekannt. Unter der Bezeichnung Polyvest^{R} OC 4000 wird beispielsweise ein estermodifiziertes Polybutadienöl vertrieben, das mit Wasser mischbar ist. Das Handelsprodukt besteht aus 74 % estermodifiziertem Polybutadienöl, das aminneutralisiert wurde. Daneben enthält das Handelsprodukt 26 % Butylglycol. Überraschenderweise wurde gefunden, daß dieses mit Wasser mischbare Polybutadienöl in ausgezeichneter Weise mit Terpentinöl dispergiert werden kann. Die so erhaltenen Dispersionen können ohne Schwierigkeiten in die oben genannten Bindemittelzusammensetzungen eingebracht werden. Beim Vermischen mit feinem feuchten oder trockenen Quarzsand wird beispielsweise ein wasserdurchlässiges Baumaterial erhalten werden, das nicht nur außerordentlich hohe Druckfestigkeiten aufweist, sondern darüber hinaus auch über eine sehr hohe Elastizität im Vergleich zu Beton- oder Zementprodukten verfügt, so daß die erhaltenen Produkte bei entsprechender Körnung auch zur Herstellung von Dünnbettspachteln geeignet sind.

Dementsprechend besteht eine bevorzugte Ausführungform der vorliegenden Erfindung in einem Bindemittel , das dadurch gekennzeichnet ist, daß 1/2 bis 1/20 des Terpentinöls durch estermodifiziertes, aminneutralisiertes Polybutadienöl ersetzt ist. Eine darüber hinaus bevorzugte Ausführungform der erfindungsgemäßen Bindemittel ist dadurch gekennzeichnet, daß das estermodifizierte, aminneutralisierte Polybutadienöl in einer Menge von 10 bis 30 Gew.% der oben genannten Menge an Terpentinöls eingesetzt wird.

Mit Hilfe der erfindungsgemäßen Bindemittel können vor allem Baustoffe, Reststoffe, Abfallstoffe und sonstige Materialien aller Art verfestigt, beschichtet oder imprägniert werden. Nach Benetzung der Materialien mit dem Bindemittel, beispielsweise durch Vermischen, Eintauchen, Besprühen, Aufstreichen, erfolgt die oxidative Aushärtung durch Luftsauerstoff, vorzugsweise bei Raumtemperatur, und damit eine Verklebung des Material-Bindemittelgemisches. So können auch Natursteine dauerhaft verfestigt werden oder kontaminierte Baustoffe, Hausmüll oder andere Materialien aller Art mit den erfindungsgemäßen Bindemitteln eingekapselt werden.

Die Mengenverhältnisse von zu verfestigenden, zu verklebenden, zu beschichtenden oder zu imprägnierenden Materialien und Bindemitteln richten sich nach den Erfordernissen der jeweiligen Anwendung. Eine hohe Verfestigungswirkung bedingt selbstverständlich einen hohen Anteil an Bindemittel, während eine geringe Menge an Bindemittel eine geringe Verfestigungswirkung aber hohe Kriechwirkung hervorruft. In einer bevorzugten Ausführungsform der vorliegenden Erfindung werden die Bindemittel in einer Menge von 0,02 bis 30 Gew.%, bezogen auf das Material, zur Verfestigung, Verklebung, Beschichtung oder Imprägnierung von Baustoffen, Wertstoffen, Abfallstoffen und sonstigen Materialien aller Art eingesetzt. Eine besonders bevorzugte Ausführungsform der vorliegenden Erfindung beinhaltet den Einsatz einer Menge von 1,5 bis 10 Gew.% zur Verfestigung von Baustoffen, Reststoffen, Abfallstoffen und/oder sonstigen Materialien.

Die Auswahl der mit Hilfe der erfindungsgemäßen Bindemittel zu verfestigenden, zu verklebenden, zu beschichtenden oder zu imprägnierenden Stoffe ist praktisch nicht begrenzt. So können insbesondere feuchter oder trockener Sand, Blähschiefer, Kies, Zement, Schotter, Holz, Mineralfasern, beispielsweise Fasern aus Asbest, steinwolle, Glas oder Glaswolle, Schaumstoffgranulate, Holzwolle, Glaswolle, Steinwolle, Glimmer, Blähton, Lehm, Ton, Schmelzgranulate, Fasern aus synthetischem oder natürlichem Material, Keramikfasern, Kunststoffteile, insbesondere aus Polyethylen, Polyurethan, Polyvinylchlorid, Polystyrol, deren Granulate oder Schaumstoffe, Mineralien, Mikromineralien, Stäube aller Art, Carbonate, Alt-Reifen-Granulate, gekörnte Abfälle, Klärschlamm, Verbrennungsrückstände, Flugaschen, Abfallreste von Verbundelementen oder Zementprodukten, Schlacken, Glas, Schaumglasgranulat, keramische Teile und -Abfälle mit Hilfe der erfindungsgemäßen Bindemittel verfestigt, verklebt, beschichtet oder imprägniert werden.

Insbesondere können die erfindungsgemäßen Bindemittel somit zur Herstellung von Flächenbefestigungen, wie Straßenflächen, Gehwegflächen, Radwegflächen, Tennisplätzen, Garageneinfahrten, Hofbefestigungen, Pflasterverfugungen, Ausgleich- und Niveau-Estrichen, Estrichen für Fußbodenheizung, Ausgleichbeton, Formbeton, Dünnbettmörtel, Dünnbettspachtel, Fugenmörtel, Umkehrdächer, wasserdurchlässige Baumscheiben, Baufertigteilen und -Formteilen wie Platten, Pflaster, kaschierte Platten, Pflanzgefäßen, Standfiguren, Abstandhaltern, Dränageplatten, Filterplatten, Steinrohlingen, Natursteinnachbildungen, Natursteinrestaurierungen und zur Gefachausbildung verwendet werden. Mit Hilfe der vorliegenden Erfindung ist es möglich, Asbestfasern, beispielsweise in Form von Spritzasbest oder Faserplatten, derart zu binden, daß eine sofortige Dekontamination oder Asbestsanierung durch Entfernung der Materialien nicht erforderlich ist. Verunreinigungen der Oberflächen stören in der Regel nicht, so daß die erfindungsgemäßen Bindemittel beispielsweise durch Sprühen direkt, ohne eine Vorreinigung, auf die Oberflächen aufgebracht werden können. In gleicher Weise können die erfindungsgemäßen Bindemittel zur Verfestigung von Putzen oder Steinen aller Art eingesetzt werden. Auch im Bergbau ist die Verwendung zur Bindung von Kohlestäuben möglich.

Eine weitere Möglichkeit der Beschichtung von Oberflächen besteht beispielsweise in der Verwendung der erfindungsgemäßen Bindemittel als Unterbodenschutz oder Steinschlagschutz im Automobilbereich sowie als Haftbrücke bei fetthaltigen Materialien und Edelstahl.

Schadstoffbelastete Fugenabdichtungen, -bänder und -flächen können insbesondere durch Besprühen oder Streichen so versiegelt werden, daß die Schadstoffe nicht mehr entweichen können und die sonst notwendige Entsorgung und Lagerung entfällt.

Die erfindungsgemäßen Bindemittel können beispielsweise für die Verfestigung ein- und mehrkörniger, trockener Sande eingesetzt werden. Die üblicherweise hellgrünen über dunkelgrün, braun bis violetten Bindemittel haben meist einen schwachen, spezifischen Eigengeruch, der durch gewisse Anteile an Pine Oil überlagert werden kann.

Nach Benetzung der Sande oder sonstigen Materialien mit den erfindungsgemäßen Bindemitteln erfolgt die oxidative Aushärtung durch Luftsauerstoff beispielsweise bei Raumtemperatur oder erhöhter Temperatur, und eine Verklebung des Baustoff-Bindemittel Gemisches unter Erhalt eines wasserdurchlässigen Körpers.

Bei Herstellung in einer Negativform kann nach dem Abbinden dieser Körper ohne Probleme entnommen werden. Formteile können direkt in Holz- oder sonstigen Formen gefertigt werden. Trennmittel, wie beispielsweise Schalöle, sind normalerweise nicht erforderlich.

Die erfindungsgemäßen Bindemittel können beispielsweise als Einkomponentensystem zur Verfestigung von Sanden unterschiedlicher Körnungen eingesetzt werden. Je nach Kornverteilung und Feuchtigkeitsgehalt sind Einsatzmengen von 0,5 bis 10 Gew.%, insbesondere 1,5 bis ca. 10 Gew.% Bindemittel, bezogen auf das zu verfestigende Material, bevorzugt. Bei Verwendung der erfindungsgemäßen Bindemittel wird der Farbton des zu verfestigenden Materials, insbesondere des Sandes nicht verändert. Die Sandstruktur und der natürliche Hohlraumgehalt des Sandes bleiben auch bei dichtester Lagerung fast vollkommen erhalten.

Hierdurch ist eine gute Wasserdurchlässigkeit ausgehärteter Bindemittel-Sand-Mischungen gegeben. Bei Bedarf ist eine Färbung der Massen durch Zugabe an sich bekannter, wetterbeständlger Farbpigmente zu den zu verfestigenden Materialien ebenso möglich, wie die vorherige Zugabe von Farbpigmenten zu den Bindemitteln.

Die Aushärtung der Mischungen erfolgt durch Aufnahme von Luftsauerstoff und ist dementsprechend auch temperaturabhängig. Typische Verarbeitungszeiten für Bindemittelgemische mit den verschiedensten Materialien aller Art, beispielsweise Sande, betragen 120 min. bei 3 °C oder 60 min. bei 20 °C. Die Bindemittel-Sand-Mischungen werden bevorzugt in Mischaggregaten (Freifallmischern) hergestellt und müssen unverzüglich weiterverarbeitet werden. Kleine Mengen können ohne weiteres mit handelsüblichen Bohrmaschinenvorsätzen verarbeitet werden. Auch das Anrühren von Hand ist möglich.

Beim Zusatz der erfindungsgemäßen Bindemittel zu handelsüblichen Zementmischungen, vorzugsweise Traßzementmischungen, die beispielsweise 10 Gew.Teile Wasser auf 100 Gew.Teile Traßzement enthalten, kann eine wasserfest abbindende Masse enthalten werden. Beim Einsatz des oben genannten modifizierten Polybutadienöl in der Bindemittelzusammensetzung werden mehr oder weniger elastische wasserfeste Formteile oder im Rohzustand auch Fertigmörtel, insbesondere Dünnbettmörtel, Flußspachtel oder Dünnbettspachtel erhalten, die beispielsweise für die Betonsanierung eingesetzt werden können. Ebenso ist die Verwendung der Bindemittel in üblichen Haftvermittlern oder Beschichtungsmitteln möglich. Hierbei können die Materialien teilweise oder vollständig eingekapselt werden.

Daneben ist auch die Verwendung der Bindemittel als Additiv in allen bekannten Beton-, Estrich-, Putz- und Fugenmaterialien möglich. Unabhängig davon, ob deren Basis mineralischer, kunststoff- oder kunststoffvergüteter Herkunft ist, wird bei den hier eingesetzten Materialien durch den Zusatz des erfindungsgemäßen Bindemittels das Eigenschaftsprofil nicht verschlechtert, sondern in der Regel verbessert. Bei der Verwendung zur Herstellung von Beton kann beobachtet werden, daß die Rostneigung der Armierungen aufgrund der höheren Oberflächenflexibilität geringer ist beim Vergleich derselben Proben ohne Zusatz der Bindemittel.

### Ausführungsbeispiel

Aus 100 Gew.Teilen Sand mit einem Feuchtigkeitsgehalt von etwa 2 % und 2 Gew.Teilen Bindemittel bestehend aus 41,4 Gew.-Teilen Polybutadienöl (Univest^{R} S, Hüls AG), 10,9 Gew.-Teilen Pine Oil (handelsübliches spezifisches Gewicht bei 15,5 °C im Bereich von 0,916 bis 0,924, Terpenalkoholgehalt ca. 70 bis 75 %), 10,2 Gew.-Teilen wasserverdünnbares, unverseifbares, aminneutralisiertes 1,4-cis-Polybutadienöl (74 Gew.-% in Butylglykol) (Polyvest^{R} OC 4000) und 37,5 Gew.-Teilen aliphatische Kohlenwasserstoffe (Shellsol^{R} T) (relatives Molekulargewicht 172, eine Verdunstungszahl nach DIN 53170 von 107, einem nicht meßbaren Aromatengehalt mit weniger als 0.01 Gew.% Benzol und einem Siedebereich von 182 bis 212 °C) wurden Prismen einer Kantenlänge von 4 x 4 x 16 cm hergestellt.

Nach 3 Tagen bei 50 °C ergab sich eine Druckfestigkeit von 13,2 N/mm², nach 7 Tagen bei 50 °C eine Druckfestigkeit von 18,5 N/mm² und nach 28 Tagen bei 50 °C eine Druckfestigkeit von wenigstens 30 N/mm².

Die Biegezugfestigkeit wurde nach 3 Tagen bei 50 °C mit 6,0 N/mm² bestimmt. Das Elastizitätsmodul betrug ca. 2,9 x 10³ N/mm², und die Zugfestigkeit nach DIN 53455 2,0 N/mm².

Die Scherfestigkeit betrug ca. 1,3 N/mm² ohne Auflast.

Eingesetzt wurde ein Kristallsand der Kornstufe nach ISO Vorzugsreihe "G 40", "G 40T" mit einer Korngrößenverteilung im Bereich von 0,25 bis 1 mm.

## Patentansprüche

1. Lufttrocknende Bindemittel auf der Basis von bei Raumtemperatur flüssigen Polybutadienölen und aliphatischen Kohlenwasserstoffen, dadurch gekennzeichnet, daß sie 35 bis 89,5 Gew.-% aromatenfreie aliphatische Kohlenwasserstoffe, die weniger als 100 ppm Aromaten enthalten mit einer Verdunstungszahl nach DIN 53170 im Bereich von mehr als 100 bis 1000 und 0,5 bis 30 Gew.-% Terpentinöl enthalten.

2. Bindemittel nach Anspruch 1, dadurch gekennzeichnet, daß das Polybutadienöl etwa 72 % 1,4-cis Doppelbindungen, etwa 27 % 1,4-trans-Doppelbindungen und etwa 1 % 1,2-Vinyl-Doppelbindungen aufweist und eine Molmasse von etwa 1800, eine Dichte von etwa 0,91 g/cm³ und eine Viskosität von 770 mPa·s (Brookfield) besitzt.

3. Bindemittel nach Anspruch 1 oder 2 dadurch gekennzeichnet, daß das Polybutadienöl Hydrophobierungs-, Alterungs- und Ermüdungsschutzmittel, Füllstoffe und/oder Pigmente und/oder Polymerharze enthält.

4. Bindemittel nach einem oder mehreren der Ansprüche 1 bis 3, dadurch gekennzeichnet, daß das Polybutadienöl Trockenstoffe vom Typ mehrwertiger organischer Metallsalze und/oder nichtionogene Netzmittel enthält.

5. Bindemittel nach Anspruch 4, dadurch gekennzeichnet, daß die organischen Metallsalze Kobalt, Blei Magnesium und/oder Mangan enthalten.

6. Bindemittel nach Anspruch 4, dadurch gekennzeichnet, daß als nichtionogene Netzmittel Nonylphenolethoxylate enthalten sind.

7. Bindemittel nach einem oder mehreren der Ansprüche 1 bis 6, dadurch gekennzeichnet, daß Terpentinöl in einer Menge von 1 bis 20 Gew.-%, bezogen auf das Bindemittel, enthalten ist.

8. Bindemittel nach Anspruch 1, dadurch gekennzeichnet, daß neben den Polybutadienölen aliphatische Kohlenwasserstoffe nach Anspruch 1 in einer Menge von 35 bis 55 Gew.-% und Pine Oil in einer Menge von 5 bis 15 Gew.-% enthalten sind.

9. Bindemittel nach Anspruch 7 oder 8, dadurch gekennzeichnet, daß 1/2 bis 1/20 des Terpentinöls durch estermodifiziertes, aminneutralisiertes Polybutadienöl ersetzt wird.

10. Bindemittel nach Anspruch 9, dadurch gekennzeichnet, daß das estermodifizierte, aminneutralisierte Polybutadienöl 10 bis 30 Gew.-% des aromatenfreien Terpentinöls substituiert.

11. Verwendung das Bindemittels nach einem oder mehreren der Ansprüche 1 bis 10 zur Verfestigung, Verklebung, Beschichtung und/oder Imprägnierung von Baustoffen, Reststoffen, Abfallstoffen und sonstigen Materialien aller Art.

12. Verwendung nach Anspruch 11, in einer Menge von 1 bis 30 Gew.-%, insbesondere 1,5 bis 10 Gew.-% bezogen auf die zu verfestigenden, zu verklebenden, zu beschichtenden oder zu imprägnierenden Materialien.

13. Verwendung des Bindemittels nach einem oder mehreren der Ansprüche 1 bis 10 als Zusatzmittel in an sich bekannten Beton-, Estrich-, Putz- und Fugenmaterialien.

14. Verwendung nach Ansprüchen 11 oder 12, dadurch gekennzeichnet, daß als Baustoff feuchter oder trockener Sand, Blähschiefer, Kies Zement, Schotter, Holz, Mineralfasern, insbesondere Asbestfasern, Steinwollefasern, Glasfasern und Glaswollefasern, Schaumstoffgranulate, Holzwolle, Glaswolle, Steinwolle, Glimmer, Blähton, Lehm, Ton, Schmelzgranulate, Fasern aus synthetischem oder natürlichem Material, Keramikfasern, Kunstoffteile, insbesondere aus Polyethylen, Polyurethan, Polyvinylchlorid, Polystyrol, deren Granulate oder Schaumstoffe, Mineralien, Mikromineralien, Stäube aller Art, Carbonate, Alt-Reifen-Granulate, gekörnte Abfälle, Klärschlamm, Verbrennungsrückstände, Flugaschen, Abfallreste von Verbundelementen oder Zementprodukten, Schlacken, Glas, Schaumglasgranulat, keramische Teile und Abfälle eingesetzt werden.

15. Verwendung nach Anspruch 11 oder 12 zur Herstellung von Flächenbefestigungen, insbesondere Straßenflächen, Gehwegflächen, Radwegflächen, Tennisplätzen, Garageneinfahrten, Hofbefestigungen, Pflasterverfugungen, Ausgleichs- und Niveau-Estriche, Estriche für Fußbodenheizung, Ausgleichsbeton, Formbeton, Dünnbettmörtel, Dünnbettspachtel, Fugenmörtel, Umkehrdächer, wasserdurchlässige Baumscheiben, Baufertigteilen und -Formteilen, insbesondere Platten, Pflaster, kaschierte Platten, Pflanzgefäßen, Standfiguren, Abstandhaltern, Dränageplatten, Filterplatten, Steinrohlingen, Natursteinnachbildungen, für Natursteinrestaurierungen und zur Gefachausbildung.

16. Verwendung nach Anspruch 11 oder 12 zur Herstellung von Unterbodenschutz, Steinschlagschutz und/oder Hohlraumversiegelung im Automobilbereich.

17. Verwendung nach Anspruch 13 oder 14 als Haftvermittler und/oder Haftgrundierung, insbesondere im Baubereich.

## Claims

1. Air-drying binders based on polybutadiene oils which are liquid at room temperature and aliphatic hydrocarbons, characterized by containing from 35 to 89.5% by weight of aromatics-free aliphatic hydrocarbons containing less than 100 ppm of aromatics and having an evaporation index according to DIN 53170 ranging from more than 100 to 1000, and from 0.5 to 30% by weight of turpentine oil.

2. The binders according to claim 1, characterized in that said polybutadiene oil contains about 72% of 1,4-cis double bonds, about 27% of 1,4-trans double bonds and about 1% of 1,2-vinyl double bonds and has a molecular weight of about 1800, a density of about 0.91 g/cm³ and a viscosity of 770 mPa·s (Brookfield).

3. The binders according to claim 1 or 2, characterized in that said polybutadiene oil contains hydrophobing agents, anti-ageing agents, fatigue-preventing agents, fillers and/or pigments and/or polymer resins.

4. The binders according to one or more of claims 1 to 3, characterized in that said polybutadiene oil contains desiccants of the type polyvalent organic metal salts and/or non-ionogenic wetting agents.

5. The binders according to claim 4, characterized in that said organic metal salts contain cobalt, lead, magnesium and/or manganese.

6. The binders according to claim 4, characterized by containing nonylphenol ethoxylates as said non-ionogenic wetting agents.

7. The binders according to one or more of claims 1 to 3, characterized by containing turpentine oil in an amount of from 1 to 20% by weight, based on the binder.

8. The binders according to claim 1, characterized by containing aliphatic hydrocarbons according to claim 1 in an amount of from 35 to 55% by weight and pine oil in an amount of from 5 to 15% by weight in addition to said polybutadiene oils.

9. The binders according to claim 7 or 8, characterized in that from 1/2 to 1/20 of said turpentine oil is replaced by ester-modified, amine-neutralized polybutadiene oil.

10. The binders according to claim 9, characterized in that from 10 to 30% by weight of said aromatics-free turpentine oil is replaced by said ester-modified, amine-neutralized polybutadiene oil.

11. Use of the binder according to one or more of claims 1 to 10 for the consolidation, bonding, coating and/or impregnation of building materials, residual materials, waste products and all kinds of other materials.

12. The use according to claim 11, in an amount of from 1 to 30% by weight, and especially from 1.5 to 10% by weight, based on the materials to be consolidated, bonded, coated or impregnated.

13. Use of the binder according to one or more of claims 1 to 10 as an additive in per se known concrete, screed, plaster and joint materials.

14. The use according to claim 11 or 12, characterized in that moist or dry sand, expanded slate, gravel, cement, crushed rock, wood, mineral fibers, especially asbestos fibers, rock wool fibers, glass fibers and glass wool fibers, foam granules, wood wool, glass wool, rock wool, mica, expanded clay, loam, clay, melt granules, fibers of synthetic or natural materials, ceramic fibers, plastic parts, especially of polyethylene, polyurethane, poly(vinyl chloride), polystyrene, granules or foams thereof, minerals, micro-minerals, dusts of all kinds, carbonates, used-tire granulates, grained waste, sewage sludge, combustion residues, fly ashes, waste leftovers from composite members or cement products, slags, glass, foam glass granules, ceramic parts and wastes are employed as said building material.

15. The use according to claim 11 or 12, for producing consolidated areas, especially road areas, footpath areas, bikeway areas, tennis courts, garage driveways, courtyard pavings, pavement pointings, balance and levelling floors, screeds for floor heating, levelling screed, molding concrete, thin-bed mortar, thin-bed putty, joint cement, reversed roofs, water-permeable drainage rings around trees, prefabricated building units and moldings, especially panels, paving, laminated boards, plant vessels, statues, spacers, drainage panels, filter plates, stone blanks, natural rock replicas, for natural rock restorations and in half-timbered building.

16. The use according to claim 11 or 12, for making an underseal, gravel protection and/or cavity sealing in the automobile sector.

17. The use according to claim 13 or 14, as adhesion promotor and/or primer, especially in the building sector.

## Revendications

1. Liants séchant à l'air à base d'huiles polybutadiènes liquides à température ambiante et hydrocarbures aliphatiques, caractérisés en ce qu'ils contiennent, dans une quantité de 35 à 89,5% en poids, des hydrocarbures aliphatiques dépourvus de composés aromatiques, qui contiennent moins que 100 ppm de composés aromatiques, ayant un indice d'évaporation selon DIN 53170 compris dans la gamme de plus que 100 à 1000 et, dans une quantité de 0,5 à 30% en poids, de l'huile de térébenthine.

2. Liants selon la revendication 1, caractérisés en ce que l'huile polybutadiène a environ 72% de doubles liaisons 1,4-cis, environ 27 % de doubles liaisons 1,4-trans et environ 1% de doubles liaisons 1,2 vinyle, une masse moléculaire d'environ 1800, une densité d'environ 0,91 g/cm³ et une viscosité de 770 mPa·s (Brookfield).

3. Liants selon l'une des revendications 1 ou 2, caractérisés en ce que l'huile polybutadiène contient des produits d'imperméabilisation, anti-vieillissement et anti-fatigue, des charges et/ou des pigments et/ou des résines polymères.

4. Liants selon l'une ou plusieurs des revendications 1 à 3, caractérisés en ce que l'huile polybutadiène contient des dessiccateurs du type de sels métalliques organiques polyvalents et/ou des agents mouillants non ionogènes.

5. Liants selon la revendication 4, caractérisés en ce que les sels métalliques organiques contiennent du cobalt, du plomb, du magnésium et/ou du manganèse.

6. Liants selon la revendication 4, caractérisés en ce qu'ils contiennent comme agent mouillant non ionogène des nonylphénolèthoxylates.

7. Liants selon l'une ou plusieurs des revendications 1 à 6, caractérisés en ce qu'ils contiennent de l'huile de térébenthine dans une quantité de 1 à 20% en poids par rapport au liant.

8. Liants selon la revendication 1, caractérisés en ce qu'ils contiennent, outre les huiles polybutadiènes, des hydrocarbures aliphatiques selon la revendication 1 dans une quantité de 35 à 55% en poids et de l'huile de pin dans une quantité de 5 à 15% en poids.

9. Liants selon l'une des revendications 7 ou 8, caractérisés en ce que 1/2 à 1/20 de l'huile de térébenthine est remplacé par une huile polybutadiène à modification ester et neutralisation par amines.

10. Liants selon la revendication 9, caractérisés en ce que l'huile polybutadiène à modification ester et neutralisation par amines a substitué 10 à 30% en poids de l'huile de térébenthine dépourvue de composés aromatiques.

11. Utilisation du liant selon l'une ou plusieurs des revendications 1 à 10 pour durcir, coller, revêtir et/ou imprégner les matériaux de construction, les résidus, les chutes et autres matériaux de tous genres.

12. Utilisation selon la revendication 11, dans une quantité de 1 à 30% en poids, notamment 1,5 à 10% en poids, par rapport aux matériaux à durcir, à coller, à revêtir ou à imprégner.

13. Utilisation du liant selon l'une ou plusieurs des revendications 1 à 10 comme adjuvant pour les matériaux de bêton, de chapes, de crépi et de jointement connus par soi.

14. Utilisation selon l'une des revendications 11 ou 12, caractérisée en ce que le sable sec ou humide, le schiste gonflé, le gravier, le ciment, la pierre concassée, le bois, les fibres minérales, notamment les fibres d'amiante, de laine minérale, de verre et de laine de verre, les granulés de mousse, la laine de bois, la laine de verre, les laines minérales, le mica, l'argile gonflé, le limon, l'argile, les granulés de fusion, les fibres de matériaux synthétiques ou naturels, les fibres céramiques, les pièces en plastique, notamment en polyéthylène, polyuréthane, polyvinylchloride, polystyrène, leurs granulés ou mousses, les minéraux, les micro-minéraux, les poussières de tous genres, les carbonates, les granulés de vieux pneus, les granulés de déchets, les boues de décantation, les résidus de combustion, les cendres volantes, les chutes des éléments de liaison ou des produits en ciment, les scories, le verre, les granulats de verre expansé, les pièces céramiques et les déchets céramiques sont utilisés comme matériaux de construction.

15. Utilisation selon l'une des revendications 11 ou 12, pour la fabrication de revêtements de surfaces, notamment les routes, les voies piétonnes, les pistes cyclables, les cours de tennis, les entrées de garage, les fixations de cours, des jointement des pavés, des chapes de compensation ou de nivellement, des chapes pour les chauffages au sol, du bêton de propreté, du bêton moulé, des mortiers en couche mince, des rebouchages en couche mince, des toits renversés, des sections d'arbre perméables à l'eau, des pièces préfabriquées et moulées, notamment plaques, pavés, plaques laminées, récipients de plantes, statuettes, entretoises, plaques de drainage, plaques filtrantes, blocs verts, simili-pierres de construction, restauration pierres naturelles et formation de pans.

16. Utilisation selon l'une des revendications 11 ou 12, pour l'obtention d'une protection du bas de caisse ou protection contre les projections de pierres et/ou des protections des cavités dans le secteur automobile.

17. Utilisation selon l'une des revendications 13 ou 14, pour agents d'adhérence et/ou couche de fond d'adhérence, notamment dans le domaine du bâtiment.
